# EUROPÄISCHE PATENTANMELDUNG

(11) **EP 2 612 711 A1**
(43) Veröffentlichungstag der Anmeldung: **10.07.2013**
(21) Anmeldenummer: 13157376.8
(22) Anmeldetag: 03.02.2011
(51) Int. Cl.: B05D 7/14, B32B 15/082, B32B 27/30, C09D 127/18, C08L 27/18, C08L 71/00

(54) **Metallisches Bauteil, Verfahren zur Herstellung eines metallischen Bauteils und Beschlag, Möbel und/oder Haushaltsgroßgerät**

(30) Priorität: 09.02.2010 DE 102010000344
(62) Teilanmeldung aus: 11705176.3
(71) Anmelder: Paul Hettich GmbH & Co. KG, 32278 Kirchlengern (DE); Baf Industrie- Und Oberflächentechnik GmbH, 36452 Fischbach (DE)
(72) Erfinder: Schrubke, Lars, 32278 Kirchlengern (DE); Kampmeier, Klaus-Dieter, 36452 Fischbach (DE); Rehage, Daniel, 33611 Bielefeld (DE)
(74) Vertreter: Dantz, Jan Henning

(57) **Zusammenfassung**

Ein Beschlag, Möbel und/oder Haushaltsgroßgerät welcher/welches aus metallischen Bauteilen zusammengesetzt ist, wobei das metallische Bauteil zumindest abschnittsweise eine Beschichtung aufweist, die zumindest ein Perfluoralkoxy-Copolymer (PFA)umfasst, sowie Verfahren zu dessen Herstellung und einen Beschlag, ein Möbel und/oder ein Haushaltsgroßgerät.

## Beschreibung

Die vorliegende Erfindung betrifft ein metallisches Bauteil, insbesondere für einen Beschlag, ein Möbel und/oder ein Haushaltsgroßgerät und ein Verfahren zu dessen Herstellung und einen Beschlag, ein Möbel und/oder Haushaltsgroßgerät.

Metallische Bauteile, insbesondere Beschläge in Haushaltsgeräten sind extremen Bedingungen insbesondere Fett- und Schmutzablagerungen unterworfen, welche wesentlich die Lebensdauer und Funktionsweise derartiger Bauteile beeinflussen.

Die DE 199 28 601 A1 (D1) offenbart PFA-Beschichtungen auf metallischen Bauteilen.

In der WO 98/58984 A1 (D2) ist eine Zusammensetzung mit einem majoritären Anteil an PTFE (z.B. 88 Gew.-%) gegenüber einem Copolymer beschrieben.

Die WO 2007/132153 A1 (D7) offenbart z.B. in Beispiel 1 eine Zusammensetzung aus einem Polyetheretherketon und PFA. Hier wird PEEK (0.9 kg von PAEK No.1) majoritär gegenüber PFA (0.1 kg von PFA 5011) eingesetzt.

Die GB 2 297 554 A (D4) offenbart aus PFA und einem Polyetherketon. Die Zusammensetzung weist dabei einen maximalen Anteil an PFA von 50 Vol.% oder weniger auf.

Die JP 2007-238686 A (D6) und die JP 6 316686 (D5) offenbaren jeweils eine PEEK/PFA-Zusammensetzung mit einem gegenüber PEEK majoritären Anteil an PFA. Die JP 2007-238686 A offenbart zudem einen hohen Anteil an Haftvermittler von über 30 Massenanteilen.

Die WO 01/16240 A1 (D3) offenbart eine Zusammensetzung aus PFA und PEEK. Allerdings ist auch in dieser Druckschrift das PFA als minoritärer Bestandteil eingesetzt.

Es sind Beschläge bekannt, die zur Verbesserung ihrer Reinigbarkeit mit einer PTFE-Beschichtung versehen sind. PTFE ist jedoch schwer zu verarbeiten und benötigt einen hohen Arbeits- und Energiebedarf während des Beschichtungsverfahrens. PTFE-Beschichtungen haben zudem die Tendenz zum Abplatzen bei höheren Oberflächenspannungen und bei mechanischer Belastung.

Es ist daher Aufgabe der vorliegenden Erfindung ein metallisches Bauteil zu schaffen, das kostengünstig herstellbar und zudem leicht reinigbar ist, sowie ein Verfahren zu dessen Herstellung.

Die Erfindung löst diese Aufgabe durch die Merkmale des Anspruchs 1, 12 und 18 bis 20.

Dabei weist ein metallischen Bauteil, insbesondere ein Beschlag, ein Möbel und/oder ein Haushaltsgerät erfindungsgemäß zumindest abschnittsweise eine Beschichtung auf, die zumindest ein Perfluoralkoxy-Copolymer (PFA), gebildet aus Tetrafluorethylen und einem Perfluor (alkyl vinyl ether), umfasst.

Dabei kann das Copolymer als statistisches Copolymer, Gradienten-Copolymer, Block- oder Pfropf-Copolymer, vorzugsweise jedoch als alternierendes Copolymer ausgebildet sein.

Die Beschichtung weist hervorragende Gleiteigenschaft, eine hohe Wechseltemperaturbeständigkeit und zudem, gegenüber PTFE, verbesserte Antihafteigenschaften, geringere Tendenzen zum Abplatzen und eine verbesserte Kratzresistenz auf.

In der erfindungsgemäßen Ausführungsvariante enthält die Beschichtung zu mindestens 80 % ein Polymer-blend aus dem Copolymer und einem Polyetherketon. Polyetherketone sind einerseits hochtemperaturbeständig, so dass die Einsatztemperatur des beschichteten Beschlages von etwa 300 °C auf etwa 350 °C erhöht wird. Polyetherketone haben zudem eine hervorragende Schlagzähigkeiten und erhöhen die Härte der Beschichtung.

Weiterhin erfindungsgemäß wurde überraschend festgestellt, dass bereits ein Massenanteil von 10-40 % eines Polyetherketons zu einer Vervielfachung der Kratzresistenz der PFA-Beschichtung führt und zu einem festeren Anhaften der Beschichtung auf der metallischen Oberfläche des Bauteils.

Dies ist insbesondere der Fall, wenn als Polyetherketon Polyetheretherketon (PEEK) vorteilhaft zum Einsatz kommt.

Es ist von Vorteil, wenn der Beschlag durch eine entsprechende Behandlung der Beschichtung einen dynamischen Reibungskoeffizienten zwischen 0,15-0,4 aufweist. Somit kann die Beschichtung vorteilhaft beispielsweise auf Laufflächen von Auszugsführungen aufgebracht werden, wodurch die Laufgüte der Auszugsführungen verbessert und zugleich der Einsatz solcher Auszugsführungen in Backöfen aufgrund der hochtemperaturfesten PFA-Beschichtung ermöglicht wird.

Es ist weiterhin von Vorteil, wenn die Oberfläche der Beschichtung eine Kugeldruckhärte gemäß DIN 53456 zwischen 30-95 N/mm² aufweist. Beschläge, Möbel und/oder Haushaltsgeräte sind z.T. hohen mechanischen Belastungen ausgesetzt. Durch eine entsprechende Formulierung eines Polymer-blends oder sonstige Behandlung des PFA-Copolymers der Beschichtung kann die Kugeldruckhärte derart optimiert werden, dass das metallische Bauteil eine hohe Resistenz gegen mechanische Belastungen und abrasive Kräfte aufweist.

Es ist von Vorteil, wenn die Beschichtung mehrschichtig angeordnet ist. Dies ist insbesondere dann der Fall, wenn verschiedene Bereiche des metallischen Bauteils, insbesondere des Beschlags unterschiedlichen Kräften und Bedingungen ausgesetzt sind. So unterliegen die Außenflächen einer Auszugsführung in einem Backofen beispielsweise einem hohen Verschmutzungsgrad an Fettspritzern und Lebensmittelresten, so dass für diese Oberflächen eine hohe Reinigbarkeit aber auch ein Korrosionsschutz erfolgen muss. Die Laufflächen der Auszugsführung unterliegen eher hohen mechanischen Belastungen. Die erfindungsgemäße Beschichtung kann je nach Oberfläche durch einen mehrschichtigen Aufbau dahingehend optimiert werden, dass die vorteilhaften Eigenschaften des Copolymers um weitere Schichten von Polymer-blends, die jedoch hauptsächlich PFA enthalten, ergänzt werden.

Dabei ist es beispielsweise bei Auszugsführungen besonders von Vorteil, wenn die Beschichtung zumindest zwei Schichten aufweist, wobei die oberste Schicht vorteilhaft einen dynamischen Reibungskoeffizienten von weniger als 0,3 und somit eine hohe Gleitfähigkeit aufweist. Die darunter angeordnete Schicht weist eine Kugeldruckhärte von mindestens 0,35 N/mm², vorzugsweise mindestens 0,8 N/mm² auf, so dass sie aufgrund ihrer Härte einen erhöhten Kratz- und Korrosionsschutz darstellt.

Für einen besonders effektiven Korrosionsschutz ist es von Vorteil, wenn die oberste Schicht maximal 20 % der Schichtdicke der darunterliegenden Schicht aufweist.

Es ist beispielsweise zur Verbesserung der Laufgüte von Auszugsführungen von Vorteil, wenn in die Beschichtung, insbesondere im Bereich der Laufflächen von Auszugsführungen, Schmiermittel eingearbeitet ist, so dass das Schmiermittel durch die Beschichtung an der Oberfläche des Beschlags festgelegt ist.

Für eine verbesserte Optik ist es weiterhin vorteilhaft, wenn die Beschichtung transparent oder transluzent ist.

Alternativ oder zusätzlich kann die Beschichtung zumindest bereichsweise Farbpigmente, beispielsweise in Form von Graphit, Glimmer, Titandioxid oder dergleichen aufweisen, welche die Beschichtung z.B. in den Farben weiß, hellgrau oder anthrazit einfärben. Dunkle Farben werden bevorzugt bei Backöfen, Gargeräten und Zubehör für diese eingesetzt. Insbesondere für Kühlgeräte kann die Beschichtung auch weiß gefärbt werden z.B. durch die Verwendung von Titandioxid. Transparente Schichten finden bei Beschlägen, Möbeln und Haushaltsgeräten Verwendung. Beschichtungen für Möbel werden entsprechend dem Kundenwunsch und den chemisch technischen Möglichkeiten eingefärbt.

Zur Verhinderung von Anlauffarben, Verbesserung des Korrosionsschutzes sowie der Erzielung einer spezifischen Oberflächenstruktur ist es von Vorteil, wenn das metallische Bauteil einen metallischen Überzug aufweist, auf die die Beschichtung aufgebracht ist.

Erfindungsgemäß umfasst ein Verfahren zur Herstellung eines metallischen Bauteils folgende Schritte:
Ausformen und/oder Umformen des metallischen Bauteils, Vorbehandlung des Bauteils,
Auftragen der Beschichtung, die zumindest ein Copolymer, gebildet aus Tetrafluorethylen und einem Perfluor (alkyl vinyl ether)
Aushärten und Sintern der aufgetragenen Beschichtung, und

### Abkühlen des beschichteten Bauteils.

In der erfindungsgemäßen Ausführungsvariante enthält die Beschichtung zu mindestens 80 % ein Polymer-blend aus dem Copolymer und einem Polyetherketon. Polyetherketone sind einerseits hochtemperaturbeständig, so dass die Einsatztemperatur des beschichteten Beschlages von etwa 300 °C auf etwa 350 °C erhöht wird. Polyetherketone haben zudem eine hervorragende Schlagzähigkeiten und erhöhen die Härte der Beschichtung.

Weiterhin erfindungsgemäß wurde überraschend festgestellt, dass bereits ein Massenanteil von 10-40 % eines Polyetherketons zu einer Vervielfachung der Kratzresistenz der PFA-Beschichtung führt und zu einem festeren Anhaften der Beschichtung auf der metallischen Oberfläche des Bauteils.

Dieses Verfahren kann in die Massenproduktion von Beschlägen, Möbeln und Haushaltsgeräten entsprechend integriert werden.

Dabei ist es von Vorteil, wenn durch Vorbehandlung des metallischen Bauteils ein Entfetten und/oder Reinigen und/oder Waschen und/oder Beizen der Oberfläche des Bauteils erfolgt, so dass ein verbessertes Anhaften der Beschichtung auf der Oberfläche gewährleistet ist. Dies kann vorzugsweise durch nasschemische Reinigungsverfahren erfolgen, kann jedoch beispielsweise auch durch thermische Behandlung der Bauteile erreicht werden.

Es ist von Vorteil, wenn nach dem Ausformen und/oder Umformen des metallischen Bauteils und/oder nach der Vorbehandlung des Bauteils ein Glätten der Oberfläche erfolgt, so dass auch bei geringen Schichtdicken die entsprechende Oberfläche vollständig mit der Beschichtung versehen ist und keine Unebenheiten aus der Oberfläche hervorstehen und eine einheitliche Oberfläche zum Anhaften für die Beschichtung gebildet wird. Das Glätten der Oberfläche kann durch Schleifen, Polieren, Strahlen oder andere gängige Verfahren erfolgen.

Zur Verhinderung von Anlauffarben ist es von Vorteil, wenn das Aushärten und Sintern des beschichteten Bauteils unter sauerstoffarmer Atmosphäre erfolgt.

Zur Verbesserung der Reinigbarkeit ist es von Vorteil, wenn nach dem Beschichten des Bauteils eine Laserbearbeitung der beschichteten Oberflächen erfolgt. Dabei wird die Hydrophobie der Beschichtung erhöht und eine Vergrößerung des Kontaktwinkels eines Flüssigkeitstropfens auf der Beschichtungsoberfläche von bis zu 10° erreicht wird. Dabei hat sich überraschend erwiesen, dass die Laserbearbeitung besonders effektiv bei einer Wellenlänge zwischen 160 bis 210 nm erfolgen kann.

Es ist weiterhin von Vorteil, wenn das Auftragen der Beschichtung durch Kunststoffflammspritzen erfolgt, da somit eine höhere Beschichtungsdichte, stärke Bindungskräfte zur metallischen Oberfläche und zwischen den Polymermolekülen, sowie eine hohe Beschichtungseffizienz erreicht werden kann.

Erfindungsgemäß ist an oder in einem Beschlag, einem Möbel, einem Haushaltsgroßgerät, insbesondere Kühlschrank, Spülmaschine oder Backofen zumindest ein erfindungsgemäßes metallisches Bauteil angeordnet. Insbesondere im Bereich der Haushaltsgroßgeräte herrschen teilweise extreme Bedingungen. So muss eine Beschichtung, die in einem Backofen zum Einsatz kommt eine Temperaturbeständigkeit von 250 °C bis zu 300 °C aufweisen und leicht reinigbar von Fettspritzern und dergleichen sein. Beschichtungen im Kühlschränken und Gefriertruhen dürfen bei Minusgraden nicht spröde oder brüchig werden und zudem kondenswasser- und eisresistent sein. Beschichtungen in Spülmaschinen müssen laugenbeständig und feuchtigkeitsbeständig bei Temperaturen von bis zu 100 °C sein. All diese Bedingungen werden durch das erfindungsgemäße metallische Bauteil, insbesondere einen Beschlag erfüllt, so dass es universell auf allen Gebieten der Haushaltsgroßgeräte einsetzbar ist. Daher müssen Beschläge für bestimmte Anwendungsgebiete nicht gesondert produziert werden, was einen erheblichen Vorteil hinsichtlich an Arbeitsaufwand, Geräteaufwand und Materialaufwand mit sich bringt.

Möbel im Sinne dieser Anmeldung sind Möbelkomponenten wie z.B. Schubkästen aber auch Haushaltsgeräte wie z.B. Backöfen, Spülmaschinen, Kühl- und Gefriergeräte, Waschmaschinen und Trockner.

Die Erfindung wird nachfolgend anhand mehrerer Ausführungsbeispiele mit Bezug auf die beigefügten Zeichnungen erläutert. Es zeigen:
- Fig. 1 bis 3: mehrere Ansichten einer ersten Ausführungsform eines erfindungsgemäßen metallischen Bauteils als Auszugsführung,
- Fig. 4 bis 5: zwei Ansichten einer weiteren Ausführungsform eines erfindungsgemäßen metallischen Bauteils als Auszugsführung mit Spritzschutzkappe,
- Fig. 6 bis 7: zwei Ansichten einer dritten Ausführungsform eines erfindungsgemäßen metallischen Bauteils als Backofenscharnier, und

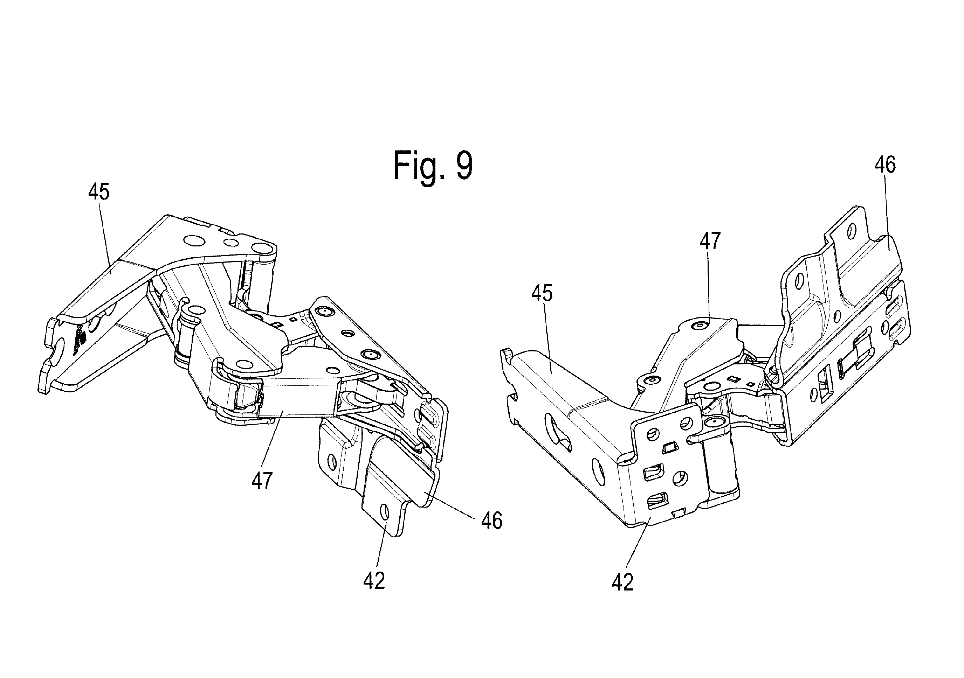

- Fig. 8 und 9: zwei Ansichten einer vierten Ausführungsform eines erfindungsgemäßen metallischen Bauteils als Kühlschrankscharnier.

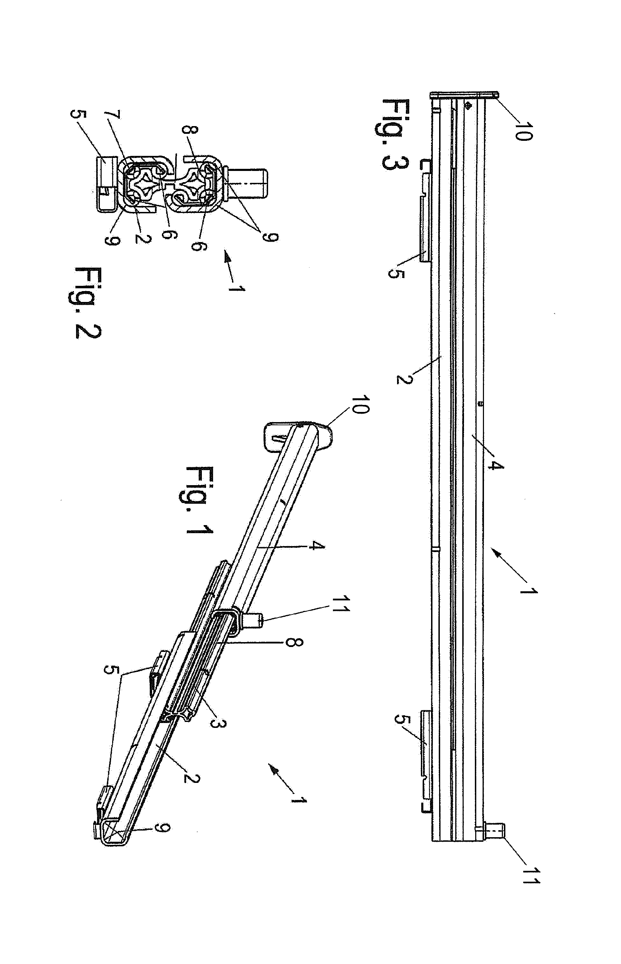

Fig. 1-3 zeigen eine Teleskopauszugsführung in Form eines Vollauszuges. Eine Auszugsführung 1 umfasst eine Führungsschiene 2, die an einem Seitengitter in einem Backofen, einer Seitenwand eines Backofens oder einem Möbelkorpus festlegbar ist. An der Führungsschiene 2 ist eine Mittelschiene 3 über Wälzkörper 6 verfahrbar gelagert. Die Mittelschiene 3 dient zur Lagerung einer Laufschiene 4. Zur Lagerung der Schienen 2, 3 und 4 sind an der Führungsschiene 2 und der Laufschiene 4 jeweils drei Laufbahnen 8 für Wälzkörper 6 ausgebildet. Die Wälzkörper 6 sind an einem Wälzkörperkäfig 7 als Einheit gehalten. Ferner sind an der Mittelschiene 3 insgesamt sechs Laufbahnen 8 für Wälzkörper 6 ausgebildet, wobei jeweils drei Laufbahnen 8 der Führungsschiene 2 und drei Laufbahnen 8 der Laufschiene 4 zugeordnet sind. Weiterhin können Teleskopauszugsführungen auch als Teilauszug ohne Mittelschiene oder als Voll- oder Überauszug mit einer oder mehreren Mittelschienen ausgeführt sein.

Zur Befestigung der Auszugsführung 1 an einem Seitengitter eines Backofens sind zwei Klammern 5 an der Führungsschiene 2 festgelegt. Auch andere Befestigungsmittel können an der Führungsschiene 2 vorgesehen sein.

Die Auszugsführung 1 ist aus Metall, vorzugsweise Edelstahl gefertigt. Die Auszugsführung 1 ist zumindest an den von außen zugänglichen Bereichen, also an der Außenseite der Führungsschiene 2 und der Laufschiene 4 mit einer Perfluoralkoxy-Copolymer (PFA) Beschichtung versehen.

Die Beschichtung enthält hauptsächlich ein Copolymer, gebildet aus Tetrafluorethylen und einem Perfluor (alkyl vinyl ether), beispielsweise Poly-(perfluorvinylmethylether).

Dieses Copolymer ist u.a. als Perfluoralkoxylalkan (PFA) bekannt und verfügt gegenüber PTFE über vorteilhafte Eigenschaften hinsichtlich seiner Verarbeitung und auch hinsichtlich der Haftung der Polymerketten untereinander.

Das Copolymer ist beispielsweise Spritzverfahren, insbesondere dem Flammspritzen zugänglich und kann daher sowohl in einer lösungsmittelbasierten Dispersion aber auch als lösungsmittelfreies Polymer auf eine metallische Oberfläche aufgetragen werden.

Ein an der Laufschiene 4 festgelegter Stopfen 10 ist an seinen von außen zugänglichen Bereichen ebenfalls mit der PFA-haltigen Beschichtung überzogen. Auch ein Haltebolzen 11 ist mit einer PFA-haltigen Beschichtung ausgestattet. Die Innenseite der Laufschiene 4 und der Führungsschiene 2, an denen die Laufbahnen 9 für die Wälzkörper 6 ausgebildet sind, weist keine Beschichtung auf. Auch die Mittelschiene 3, die vollständig im Innenbereich der Auszugsführung 1 angeordnet ist, wenn die Laufschiene 4 in der eingefahrenen Position angeordnet ist, besitzt mindestens im Bereich der Laufbahnen 8 keine Beschichtung. Dabei können die Laufbahnen 8 durch das Material der Schienen 2, 3 und 4 gebildet sein. Meist werden die Laufbahnen 8 und 9 aus einem gebogenen Stahlblech hergestellt. An der Außenseite wird durch die PFA-haltige Beschichtung an den Schienen 2 und 4 eine leichte Reinigbarkeit ermöglicht. Da der Einsatzbereich des Perfluoralkoxy-Copolymers sich bis zu 300 °C erstreckt, kann die Auszugsführung 1 besonders gut in einem Backofen eingesetzt werden, wobei zudem eine lange Lebensdauer und eine hohe Laufgüte der Auszugsführung erreicht wird.

Um im Haushaltsbereich, insbesondere in der Küche, zum Einsatz zu kommen, müssen die beschichteten Auszugsführungen den FDA-Richtlinien für Kontakt mit Lebensmitteln entsprechen. Da das Beschichtungsmaterial gemäß verschiedenen Sicherheitsdatenblättern gesundheitlich unbedenklich eingestuft wurde, ist ein Einsatzgebiet für den Kontakt mit Lebensmitteln, beispielsweise in Backöfen und auf Gargutträgern möglich.

In einer weiteren Ausführungsvariante sind die Innenseite der Laufschiene 4 und der Führungsschiene 2, an denen die Laufbahnen 9 für die Wälzkörper 6 ausgebildet sind, mit einer schmiermittelhaltigen PFA-Beschichtung versehen. Auch die Mittelschiene 3, die vollständig im Innenbereich der Auszugsführung 1 angeordnet ist, wenn die Laufschiene 4 in der eingefahrenen Position angeordnet ist, besitzt mindestens im Bereich der Laufbahnen 8 diese schmiermittelhaltige Beschichtung. Die Beschichtung im Bereich der Laufflächen kann beispielsweise aus 90 % PFA, 5 % Haftvermittler und 5 % Molybdänsulfid bezogen auf Massenanteile bestehen.

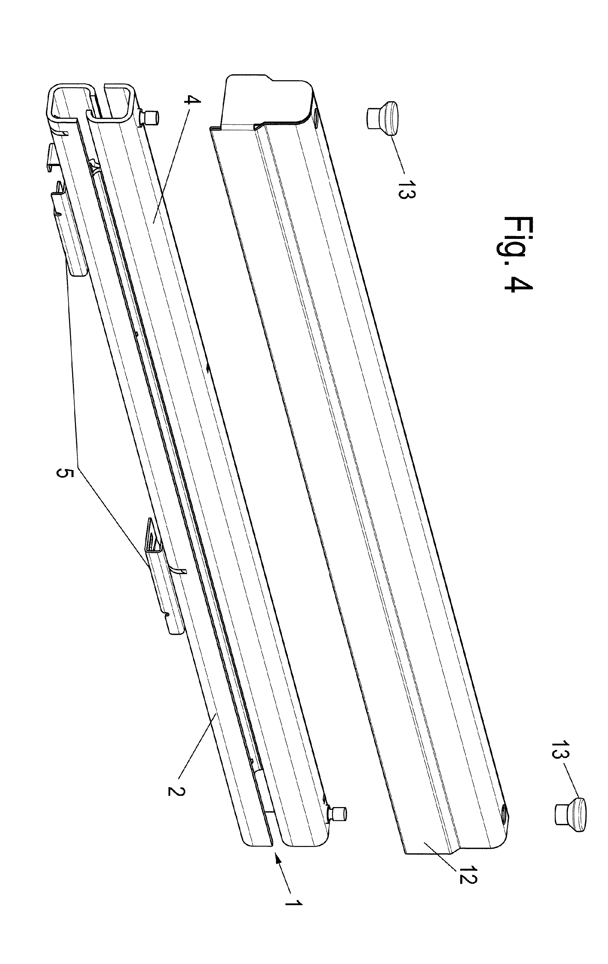

Fig. 4 zeigt eine Abdeckkappe 12, welche an der Auszugsführung 1 festgelegt werden kann. Diese Abdeckkappe ist aus einem Metallblech, vorzugsweise einem Stahlblech gefertigt und ist zumindest außenseitig mit der Perfluoralkoxy-Copolymer-Beschichtung versehen, die einerseits Fettanlagerungen auf der Metalloberfläche verhindert, andererseits auch bei Temperaturen von 250 bis 300 °C einen Feuchtigkeitsschutz bewirkt. Die Rastmittel 13 weisen ebenfalls die Beschichtung auf.

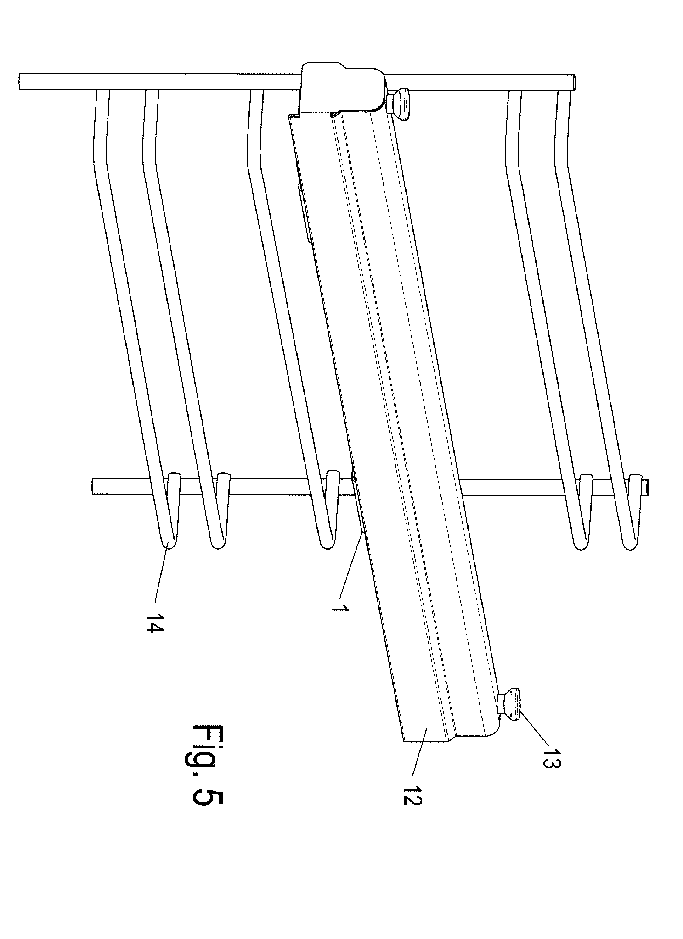

Fig. 5 zeigt die Festlegung der Auszugsführung 1 mit der Abdeckkappe 12 an dem Seitengitter 14 eines Backofens. Für eine vorteilhafte Reinigbarkeit empfiehlt es sich auch die Seitengitter 14 eines Backofens mit der Beschichtung zu versehen.

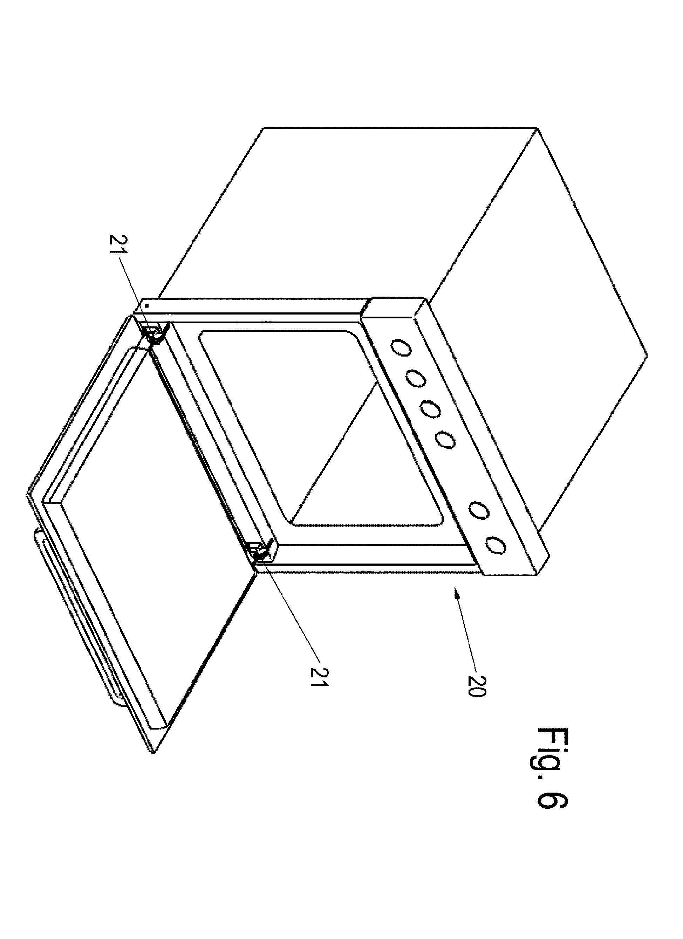

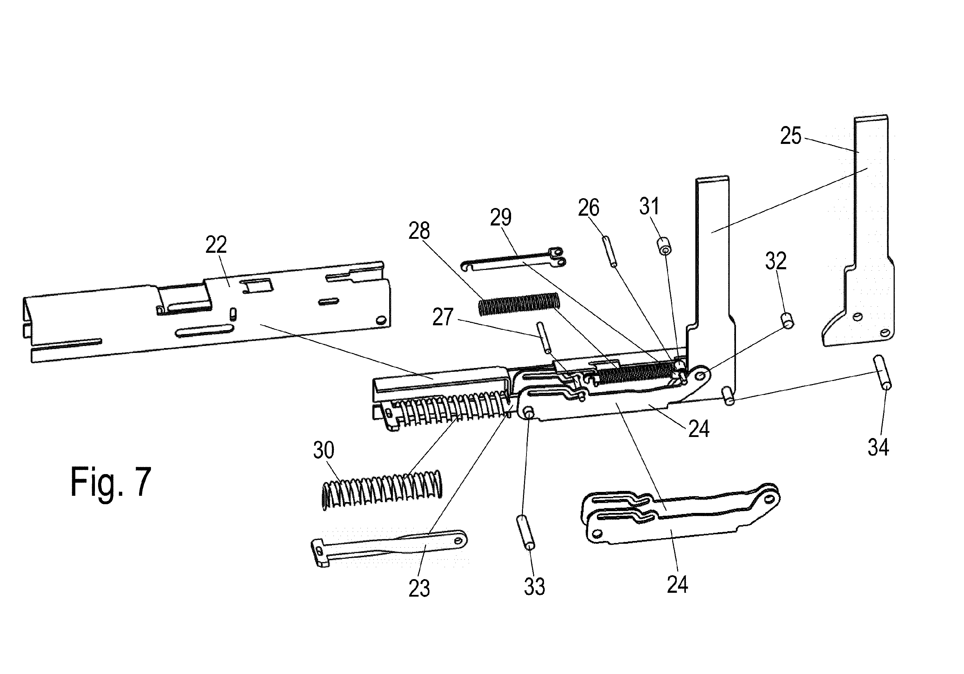

Fig. 6-8 zeigen einen Backofen 20 mit einem Scharnier 21. Das Scharnier 21 ist aus einem Gehäuse 22 zusammengesetzt, in welchem ein Linearhebel 23 angeordnet ist. Dieser Linearhebel 23 ist durch eine Nietverbindung 33 mit einem Übertragungshebel 24 gekoppelt. Auf der Längsachse des Linearhebels 23 verläuft eine Ausgleichsfeder 30, welche um den Schaft des Linearhebels 23 gewickelt ist und durch Bewegung des Linearhebels 23 verspannt werden kann. Der Übertragungshebel 24 ist mit einem Türhebel 25 über eine Nietverbindung 32 verschwenkbar gekoppelt, welcher mit einer Ofentür gekoppelt wird. Auf Höhe des Übertragungshebels 24 ist zudem ein Schließhebel 29 im Gehäuse 22 angeordnet, welcher durch eine Nietverbindung 26 festgelegt ist und welcher eine Rastnase aufweist, die in eine Rastniete 27 eingreift, die in einer Führung im Übertragungshebel 24 beweglich gelagert ist. Die Nietverbindung 26 weist zudem eine Druckrolle 31 auf, zur teilweisen Aufnahme einer Kraft, die durch den Türhebel auf die Nietverbindung 26 ausgeübt wird. Der Schaft des Schließhebels 29 ist mit einer Schließfeder 28 versehen, welche sich durch Bewegung des Scharniers 21 spannt und entspannt.

Beim vorliegenden Ausführungsbeispiel können alle Bauteile mit einer entsprechenden PFA-haltigen Beschichtung versehen sein, insbesondere jedoch die flächigen Bereiche, wie z.B. das Gehäuse 21 und der Türhebel 25.

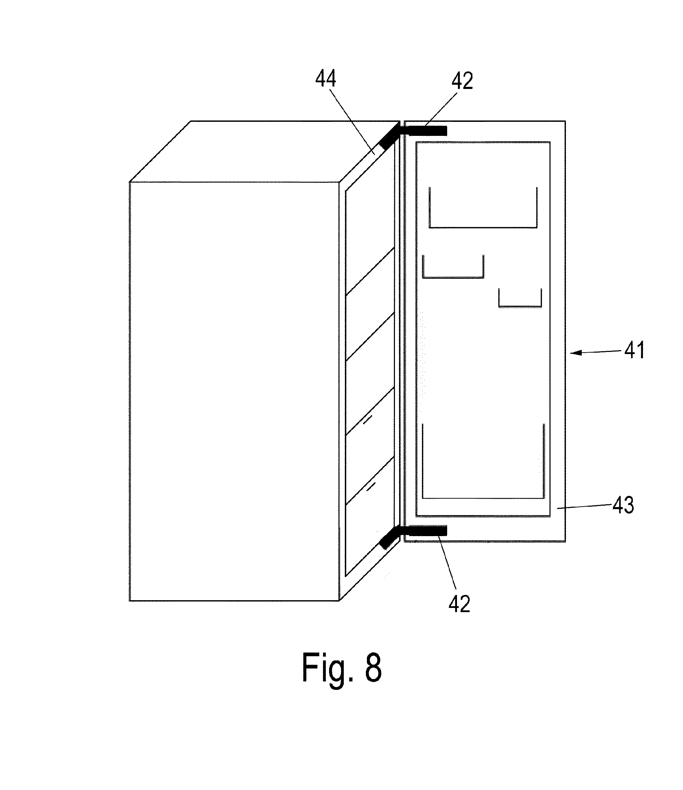

Fig. 8 zeigt einen Kühlschrank 41 mit Scharnieren 42, welche an der Kühlschranktür 43 und dem Kühlschrankkorpus 44 befestigt sind und das Öffnen des Kühlschranks 41 ermöglichen. Dabei gibt Fig. 10 eine mögliche Ausführungsform eines derartigen Scharniers 42 mit jeweils zwei Grundplatten 45, 46 und einem Scharnierarm 47 wieder. Die Oberfläche des Scharniers ist vollständig mit der PFA-haltigen-Beschichtung versehen sein, wobei in diesem Fall besonders bevorzugt Polymerblends mit Polyetherketonen, insbesondere PEEK, verwendet werden. Dabei bildet die Beschichtung Schutz vor Schmutz und Verunreinigungen, welche sich auf der Metallfläche ansammeln und erlauben eine hervorragende Reinigbarkeit der Beschläge. Weiterhin ermöglicht die Beschichtung einen Korrosionsschutz für Eisenbauteile, welche nicht durch die aggressiven Umgebungsbedingungen im Kühlschränken und Gefriertruhen angegriffen werden. Dabei haftet PFA auch bei Temperaturen von -50 bis 0 °C an der metallischen Oberfläche an, ohne aufgrund von Versprödung oder temperaturabhängiger Werkstoffausdehnung abzuplatzen.

Das erfindungsgemäße metallische Bauteil, insbesondere als Beschlag umfasst grundsätzlich alle Beschlagsvarianten, so z.B. Scharniere, Aufhängungen, Möbel-und Dekorbeschläge für den Außen und Innenbereich, insbesondere jedoch Auszugsführungen. Aufgrund der hohen Wechseltemperaturbeständigkeit können die beschichteten Beschläge universell sowohl in Backöfen bei etwa 300 °C als auch in Kühlschränken bei -50 °C eingesetzt werden. Weiterhin können die beschichteten Beschläge auch in Möbeln unter extremen klimatischen Bedingungen eingesetzt werden, wie z.B. Seeklima mit salzhaltiger Luft hoher Feuchte.

Die Beschichtung bietet metallischen Bauteilen aus Stahl einen hervorragenden Korrosionsschutz, wobei sie zudem kratzfester ist, als die bisher bekannten PTFE-Beschichtungen. Dabei kann die Beschichtung in größeren Schichtdicken als PTFE aufgetragen werden. Darüber hinaus ist die Beschichtung verglichen mit einer PTFE-Beschichtung widerstandsfähiger gegenüber hohen Oberflächenspannungen. Dies liegt u.a. daran, dass es sich bei dem verwendeten Copolymer um ein Thermoplast handelt, in welchem die einzelnen Polymerverbindungen verschmolzen sind und nicht mit Haftvermittlern lediglich verklebt, wie dies im PTFE der Fall ist. Die Beschichtung weist eine kritische Oberflächenenergie von 17,0 mN/m und somit eine bessere Reinigbarkeit auf als PTFE (18 mN/m), wobei die Reinigbarkeit der erfindungsgemäßen Beschichtung noch vorteilhaft verbessert werden kann.

Die Herstellung eines erfindungsgemäßen metallischen Bauteils, insbesondere eines Beschlags, eines Möbels und/oder eines Haushaltsgerätes kann beispielsweise nach folgendem Verfahren erfolgen:
Zunächst wird ein metallisches Bauteil aus einem Metallwerkstück durch Biegen, Pressen, Stanzen, Gießen und dergleichen in eine vorbestimmte Form gebracht.

Anschließend wird das Bauteil entgratet und durch nasschemische Vorbehandlung entfettet und gereinigt. Die Reinigungstemperatur beträgt beispielsweise 50 bis 100 °C, vorzugsweise 60 bis 80 °C. Nach 3 bis 10 Minuten, vorzugsweise 4 bis 6 Minuten Reinigungsbehandlung werden die Bauteile zunächst mit Normalwasser bzw. Stadtwasser (15 bis 25°C) und anschließend mit demineralisiertem Wasser (15 bis 25 °C) gespült. Die Trocknung der metallischen Bauteile erfolgt ca. 5-10 min bei etwa 50 bis 150 °C. Vorzugsweise kann dies bei einer kontinuierlich ansteigenden Temperatur von 80 auf 150 °C im Umluftbetrieb erfolgen.

Nach dem Abschluss der Vorbehandlungsstufen wird ein Gemisch aus dem Copolymer, gebildet aus Tetrafluorethylen und einem Perfluor (alkyl vinyl ether), und einem Primer als lösungsmittelbasierende Dispersion auf die metallische Oberfläche aufgetragen. Die Primer dienen dabei als zusätzliche Haftvermittler zwischen der Beschichtung und der metallischen Oberfläche des Bauteils. Als Lösungsmittel sind dabei sowohl organische Lösungsmittel als auch Wasser erfasst. Die Beschichtung kann auch in mehreren Lagen aufgetragen werden, wobei jede Lage eine unterschiedliche Konzentration an Primern oder verschiedene PFA-haltige Polymer-blends aufweisen kann. Auf die als Dispersion aufgetragenen und angetrockneten Schichten kann zudem eine Deckschicht pulverförmig aufgetragen werden. Ein Einschichtsystem kann durch direktes Aufbringen der Deckschicht oder einer kombinierten Schicht aus Haftvermittler (Primer) und Deckschicht (Topcoat) auf die Oberfläche des metallischen Bauteils erzeugt werden. Ein Zweischichtsystem kann aus einem Haftvermittler und einer Deckschicht bestehen. Ein Mehrschichtsystem kann aus mindestens einer Schicht Haftvermittler und einer Deckschicht sowie mindestens einer Zwischenschicht bestehen. Haftvermittler, Deckschicht und Zwischenschicht können neben dem Gemisch aus dem Copolymer, gebildet aus Tetrafluorethylen und einem Perfluor (alkyl vinyl ether), Lösemittel, keramische Zuschläge als Füllstoffe bzw. zur Erhöhung der Schichthärte, Farbpigmente, PEEK oder PTFE enthalten.

Ein flüssiger Haftvermittler kann auch mit pulverförmigen Zwischen- und/oder Deckschichten kombiniert werden.

Das Auftragen der Schichten erfolgt in einem Sprühverfahren mittels HVLP Spritzpistolen (HVLP - High Volume Low Pressure), wobei die metallischen Bauteile bevorzugt aufgehängt werden. Das HVLP-Lackierverfahren ist ein Niederdruckverfahren bei dem die flüchtigen organischen Verbindungen reduziert werden und somit die Umweltbelastung sinkt. Alternativ oder zusätzlich kann die Beschichtung auch durch Elektrostatik-Anlagen, beispielsweise durch Pulver- oder Nasslackauftrag erfolgen.

Die Trocknung der Beschichtung der Beschichtung erfolgt bei 50 bis 180 °C, vorzugsweise 80 bis 150 °C über einen Zeitraum von 5 bis 15 min.

Der anschließende Sinterungsprozess erfolgt bei einer Temperatur von 390 bis 450 °C, vorzugsweise von 400 bis 420 °C bei einer Zeit von 5 bis 20 min, vorzugsweise 8 bis 15 min.

Das Abkühlen erfolgt vorzugsweise in unterschiedlichen Temperaturrampen, um eine möglichst gleichmäßige Ausbildung und ein Verfließen der Schicht während des Abkühlens auf der Oberfläche zu erreichen und Spannungsrissen in der Beschichtung vorzubeugen.

Die aufgetragene Trockenschichtdicke beträgt nach dem Sintern 5 bis 50 µm, vorzugsweise 15 bis 35 µm.

Ein alternatives Auftragsverfahren besteht in der PFA-Beschichtung durch Kunststoffflammspritzen. Durch Kunststoffflammspritzen ist ein vorteilhafter Auftrag von PFA-Schichten möglich. Das pulverförmige PFA-Copolymer oder Copolymerblend wird über eine geeignete Spritzvorrichtung in einer Azetylen-Sauerstoff-Flamme jenseits von 3000 °C angeschmolzen und auf das zu beschichtende Bauteil gesprüht.

Durch die hohen Temperaturen schmilzt das Copolymer vollständig in der Flamme und verteilt sich gleichmäßiger auf der Oberfläche als bei anderen Auftragsmethoden.

Dadurch wird besonders vorteilhaft eine hohe Materialdichte und verbesserte Bindungskräfte der einzelnen Polymermoleküle untereinander als auch zum metallischen Untergrund erreicht. Zudem können höhere Schichtdicken von beispielsweise 100 bis 700 µm erreicht werden. Der zusätzliche Verfahrensschritt des Sinterns kann bei diesem Beschichtungsverfahren vorteilhaft entfallen.

In einem Nachbehandlungsschritt kann die Hydrophobie bzw. die Antihaftwirkung der Beschichtung durch Laserbestrahlung zusätzlich erhöht werden. Hierbei kann beispielsweise ein Exciter-Laser (ArF) mit einer Wellenlänge von 193 nm eingesetzt werden. Dabei kommt es bei einer Bestrahlung zur oberflächlichen Abtragung von Unebenheiten, wodurch die Antihafteigenschaften verbessert werden und superhydrophobe Eigenschaften der Oberflächen des metallischen Bauteils entstehen, so dass nochmals eine Verbesserung der Reinigbarkeit erzielt werden kann.

### Bezugszeichenliste

- 1: Auszugsführung
- 1': Auszugsführung
- 1": Auszugsführung
- 2: Führungsschiene
- 2': Führungsschiene
- 2": Führungsschiene
- 3: Mittelschiene
- 3': Mittelschiene
- 4: Laufschiene
- 4': Laufschiene
- 4": Laufschiene
- 5: Klammer
- 6: Wälzkörper
- 6': Wälzkörper
- 7: Wälzkörperkäfig
- 7': Wälzkörperkäfig
- 8: Laufbahn
- 8': Laufbahn
- 9: Laufbahn
- 9': Laufbahn
- 10: Stopfen
- 11: Haltebolzen
- 12: Abdeckkappe
- 13: Rastmittel
- 14: Seitengitter
- 20: Backofen
- 21: Scharnier
- 22: Gehäuse
- 23: Linearhebel
- 24: Übertragungshebel
- 25: Türhebel
- 26: Niet-Verbindung
- 27: Rastniet
- 28: Schließfeder
- 29: Schließhebel
- 30: Ausgleichsfeder
- 31: Druckrolle
- 32: Niet-Verbindung
- 33: Niet-Verbindung
- 34: Niet-Verbindung
- 41: Kühlschrank
- 42: Scharnier
- 43: Kühlschranktür
- 44: Kühlschrankkorpus

## Patentansprüche

1. Metallisches Bauteil, insbesondere für einen Beschlag (1, 12, 14, 21 42) ein Möbel und/oder ein Haushaltsgroßgerät, **dadurch gekennzeichnet, dass** das metallische Bauteil zumindest abschnittsweise eine Beschichtung aufweist, die zumindest ein Perfluoralkoxy-Copolymer (PFA) umfasst, wobei
die Beschichtung zu mindestens 80 % ein Polymer-blend aus dem Copolymer und einem PEEK enthält, und wobei
das Polymer-blend einen Massenanteil von 10 bis 40 % ein Polyetherketon und zu 60 bis 90 % das Copolymerisat enthält.

2. Metallisches Bauteil nach Anspruch 1, **dadurch gekennzeichnet, dass** das Polyetherketon Polyetheretherketon (PEEK) ist.

3. Metallisches Bauteil nach einem der vorhergehenden Ansprüche, **dadurch gekennzeichnet, dass** die Oberfläche der Beschichtung einen dynamischen Reibungskoeffizienten zwischen 0,15-0,4 aufweist.

4. Metallisches Bauteil nach einem der vorhergehenden Ansprüche, **dadurch gekennzeichnet, dass** die Oberfläche der Beschichtung eine Kugeldruckhärte gemäß DIN 53456 zwischen 30-95 N/mm² aufweist.

5. Metallisches Bauteil nach einem der vorhergehenden Ansprüche, **dadurch gekennzeichnet, dass** die Beschichtung ein oder mehrschichtig angeordnet ist.

6. Metallisches Bauteil nach einem der vorhergehenden Ansprüche, **dadurch gekennzeichnet, dass** die Beschichtung zumindest zwei Schichten aufweist, wobei eine erste Schicht auf der Oberfläche des metallischen Bauteils angeordnet ist und eine Kugeldruckhärte von mindestens 0,35 N/mm² aufweist und eine zweite Schicht darüber angeordnet ist und einen dynamischen Reibungskoeffizienten von weniger als 0,3 aufweist.

7. Metallisches Bauteil nach Anspruch 6, **dadurch gekennzeichnet, dass** die zweite Schicht maximal 20 % der Schichtdicke der darunterliegenden ersten Schicht aufweist.

8. Metallisches Bauteil nach einem der vorhergehenden Ansprüche, **dadurch gekennzeichnet, dass** die Beschichtung Schmiermittel enthält.

9. Metallisches Bauteil nach einem der vorhergehenden Ansprüche, **dadurch gekennzeichnet, dass** die Beschichtung transparent oder transluzent ist.

10. Metallisches Bauteil nach einem der vorhergehenden Ansprüche, **dadurch gekennzeichnet, dass** die Beschichtung Farbpigmente enthält.

11. Metallisches Bauteil nach einem der vorhergehenden Ansprüche, **dadurch gekennzeichnet, dass** das metallische Bauteil einen metallischen Überzug aufweist.

12. Verfahren zur Herstellung eines metallischen Bauteils, insbesondere für einen Beschlag, ein Möbel und/oder Haushaltsgerät, wobei das Verfahren folgende Schritte umfasst:
a) Ausformen und/oder Umformen des metallischen Bauteils,
b) Vorbehandlung des Bauteils,
c) Auftragen der Beschichtung, die zumindest Perfluoralkoxy-Copolymer (PFA) umfasst, wobei
die Beschichtung zu mindestens 80 % ein Polymer-blend aus dem Copolymer und einem PEEK oder PTFE enthält, und wobei das Polymer-blend einen Massenanteil von 10 bis 40 % PTFE oder ein Polyetherketon und zu 60 bis 90 % das Copolymerisat enthält,
d) Aushärten und Sintern der aufgetragenen Beschichtung, und
e) Abkühlen des beschichteten Bauteils.

13. Verfahren nach Anspruch 12, **dadurch gekennzeichnet, dass** durch Vorbehandlung des metallischen Bauteils ein Entfetten und/oder Reinigen und/oder Waschen und/oder Beizen der Oberfläche des Bauteils erfolgt.

14. Verfahren nach Anspruch 12 oder 13, **dadurch gekennzeichnet, dass** nach dem Ausformen und/oder Umformen des metallischen Bauteils und/oder nach der Vorbehandlung des Bauteils ein Glätten der Oberfläche erfolgt.

15. Verfahren nach einem der vorhergehenden Ansprüche, **dadurch gekennzeichnet, dass** das Aushärten und Sintern des Bauteils unter sauerstoffarmer Atmosphäre erfolgt.

16. Verfahren nach einem der vorhergehenden Ansprüche, **dadurch gekennzeichnet, dass** nach dem Abkühlen des beschichteten Bauteils eine Laserbearbeitung der beschichteten Oberflächen erfolgt.

17. Verfahren nach einem der vorhergehenden Ansprüche, **dadurch gekennzeichnet dass** das Auftragen der Beschichtung durch Kunststoffflammspritzen erfolgt.

18. Haushaltsgroßgerät, insbesondere Kühlschrank, Spülmaschine oder Backofen, **dadurch gekennzeichnet, dass** im oder an dem Haushaltsgroßgerät zumindest ein metallisches Bauteil nach einem der vorhergehenden Ansprüche angeordnet ist.

19. Möbel, **dadurch gekennzeichnet, dass** im oder an dem Möbel zumindest ein metallisches Bauteil nach einem der vorhergehenden Ansprüchen angeordnet ist.

20. Beschlag, **dadurch gekennzeichnet, dass** im oder an dem Beschlag zumindest ein metallisches Bauteil nach einem der vorhergehenden Ansprüche angeordnet ist.
